# EUROPEAN PATENT APPLICATION

(11) **EP 1 013 710 A1**
(43) Date of publication of application: **28.06.2000**
(21) Application number: 99310571.7
(22) Date of filing: 24.12.1999
(51) Int. Cl.: C08L 21/00, C08C 19/25

(54) **Rubber composition**

(30) Priority: 25.12.1998 JP 36967698; 31.03.1999 JP 9141999; 01.06.1999 JP 15339699; 02.06.1999 JP 15472399
(71) Applicant: Nippon Mitsubishi Oil Corporation, Tokyo (JP)
(72) Inventor: Otsuki, Yutaka, Yokohama-shi, Kanagawa (JP); Takagi, Akira, Yokohama-shi, Kanagawa (JP)
(74) Representative: Colmer, Stephen Gary

(57) **Abstract**

A high-molecular silane coupling agent prepared by adding a hydrosilane or mercapto compound to a butadiene polymer, and a silica, as well as a carbon black if desired, are mixed with a diene rubber.

## Description

### FIELD OF ART

The present invention relates to a rubber composition, particularly a silica-containing rubber composition containing silica as an inorganic filler in a satisfactorily dispersed state and superior in processability and mechanical strength.

Particularly, moreover, the present invention is concerned with a rubber composition for an automobile tire tread, containing silica and carbon black as inorganic fillers in a satisfactorily dispersed state and superior in all of processability, mechanical strength, fuel consumption characteristic and traction performance.

### PRIOR ART

Silica has heretofore been used as a white filler for rubber, but it has been extremely difficult to disperse silica uniformly in rubber because there occurs a remarkable increase in viscosity at the time of kneading silica into rubber. To solve this problem there has been adopted a method of using a low-molecular silane coupling agent such as alkylsilane, vinylsilane, aminosilane, or mercaptosilane, at the time of kneading silica into rubber.

However, the above compounds as coupling agents involve problems such as giving off an offensive smell at the time of heat-kneading, insufficient mechanical strength of the resulting rubber composition, and the occurrence of an undesirable crosslinking reaction (deterioration of scorch characteristic). Thus, the effect of adding such compounds has not always been satisfactory.

On the other hand, it has recently been found out that by using a silica-loaded rubber in the tread surface of an automobile tire the fuel consumption characteristic in normal vehicular running can be improved without deterioration of the tire traction performance at the time of application of the brake and for a wet road surface. Making compatible both such characteristics contrary to each other is extremely difficult in an automobile tire using carbon black alone as an inorganic filler as in the prior art. That both such characteristics can be made compatible with each other can be said to be an excellent feature of a silica-loaded tire. Particularly, the carbon dioxide discharged from an automobile is a cause of the global warming phenomenon and thus from the standpoint of the present environmental problem it can be said that the excellent fuel consumption characteristic of the silica-loaded tire is a desirable characteristic. For this reason the technique for dispersing silica in rubber uniformly and efficiently is now becoming an extremely important subject.

The above silica-loaded tire has already been put to practical use. In the manufacture thereof, a certain bifunctional silane coupling agent is used in combination with silica to attain a uniform dispersion of silica. Generally, as such a bifunctional silane coupling agent, bis(3-triethoxysilylpropyl) tetrasulfide is in wide use, which is described in Japanese Patent Laid Open Nos. 176345/96, 302149/97 and 1565/98. This silane coupling agent has an excellent molecular structure. More particularly, ethoxysilyl groups present at both molecular ends react with silanol groups at the silica surface and the tetrasulfide moiety at the molecular center reacts with double bonds of the rubber, thereby permitting formation of a covalent bond with each of silica and rubber.

However, in proceedings of Japan Rubber Association, 71, 76 (1998) it is described that the aforesaid compound is extremely expensive and that at the time of heat-kneading there occurs an undesirable crosslinking reaction (deterioration of scorch characteristic) due to liberation of sulfur atoms contained in the molecular center.

As new high-molecular silane coupling agents for silica-loaded automobile tires there are known such polyorganosiloxanes and modified compounds thereof as described in Japanese Patent Laid Open Nos. 194638/97 and 53707/98. But these high-molecular silane coupling agents do not contain any structural unit capable of being chemically bonded to rubber, or even if they contain such a structural unit, the amount thereof is extremely small. Thus, with such silane coupling agents alone, it is impossible to obtain a rubber composition applicable to the tread of an automobile tire having a satisfactory mechanical strength. Thus, there has been a problem that the use of such high-molecular silane coupling agents premises a combination thereof with a low-molecular silane coupling agent.

It is an object of the present invention to provide a novel rubber composition free of the above-mentioned problems encountered in the conventional silica-containing rubber compositions.

It is another object of the present invention to provide a silica-containing rubber composition containing silica in a satisfactorily dispersed state and superior in processability and mechanical strength.

It is a further object of the present invention to provide a rubber composition for an automobile tire tread, containing silica and carbon black in a satisfactorily dispersed state and superior in all of processability, mechanical strength, fuel consumption characteristic, and traction performance.

### SUMMARY OF THE INVENTION

The present invention firstly resides in a silane-containing rubber composition comprising a diene rubber, 10-120 parts by weight of a silica and 1-30 parts by weight of a high-molecular silane coupling agent, both based on 100 parts by weight of said diene rubber, said high-molecular silane coupling agent being prepared by adding 10-300 parts by weight of a silane compound to 100 parts by weight of a butadiene polymer having a number average molecular weight of 500 to 10,000, said silane compound being represented by the following general formula (1): 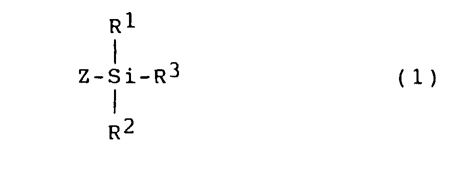 where Z- stands for H- or HS-R⁴-, R¹, R² and R³, which may be the same or different, are each methoxy, ethoxy, phenoxy, methyl, ethyl, or phenyl, with the limitation with at least one of R¹, R² and R³ is methoxy, ethoxy, or phenoxy, and R⁴ is an alkylene group having 1 to 6 carbon atoms.

The present invention secondly resides in a rubber composition for an automobile tire tread, containing a diene rubber, 30-120 parts by weight of a filler comprising a silica and a carbon black, and 1-30 parts by weight of a high-molecular silane coupling agent, both based on 100 parts by weight of the diene rubber, the high-molecular silane coupling agent being prepared by adding 10-300 parts by weight of a silane compound to 100 parts by weight of a butadiene polymer having a number average molecular weight of 500 to 10,000, the silane compound being represented by the following general formula (1): 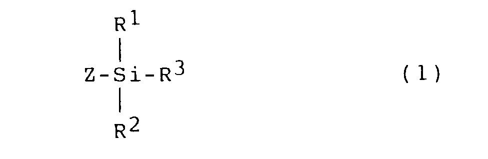 where Z- stands for H- or HS-R⁴-, R¹, R² and R³, which may be the same or different, are each methoxy, ethoxy, phenoxy, methyl, ethyl, or phenyl, with the limitation with at least one of R¹, R² and R³ is methoxy, ethoxy, or phenoxy, and R⁴ is an alkylene group having 1 to 6 carbon atoms.

The present invention is characteristic in point of using a high-molecular coupling agent (hereinafter referred to as "coupling agent X" ) prepared by adding 10-200 parts by weight of a silane compound of the above general formula (1) to 100 parts by weight of a butadiene polymer having a number average molecular weight of 500 to 10,000. The rubber composition of the present invention is not only superior in silica and carbon black dispersibility but also exhibits satisfactory processability and mechanical strength, especially an excellent vulcanization characteristic and a high tensile strength and a high modulus. Besides, the rubber composition for an automobile tire tread according to the present invention exhibits excellent fuel consumption characteristic and traction performance.

### MODE FOR CARRYING OUT THE INVENTION

The present invention will be described in detail hereinunder.

The diene rubber component used in the present invention is not specially limited insofar as it is a conjugated diene-based rubbery polymer. Examples are cis-1,4-polyisoprene rubber, 3,4-polyisoprene rubber, emulsion-polymerized styrene/butadiene copolymer rubber, solution-polymerized styrene/butadiene copolymer rubber, isoprene/butadiene copolymer rubber, styrene/isoprene copolymer rubber, styrene/isoprene/butadiene copolymer rubber, cis-1,4-polybutadiene rubber, trans-1,4-polybutadiene rubber (70-95% trans), low-vinyl polybutadiene rubber (10-30% vinyl), medium-vinyl polybutadiene rubber (30-50% vinyl), high-vinyl polybutadiene rubber (50-90% vinyl), emulsion-polymerized styrene/butadiene/acrylonitrile terpolymer rubber, and butadiene/acrylonitrile copolymer rubber. These compounds may be used each alone or in combination of two or more thereof.

No limitation is made on the type of silica to be used in the present invention. As examples of silicas employable in the invention there are mentioned dry process white carbon, wet process white carbon, colloidal silica, and precipitated silica, which may be used each alone or in combination of two or more thereof. A specific surface area of silica is not specially limited, but is preferably in the range of 50 to 400 m²/g, more preferably 100 to 250 m²/g, most preferably 120 to 200 m²/g.
The specific surface area as referred to herein indicates a nitrogen sorption specific surface area determined by a measurement method (BET method) according to ASTM D3037-81.

The type of carbon black to be used is not limited, either. Any of carbon blacks used heretofore in the manufacture of tires, especially tire treads, is employable. Such carbon blacks may be used each alone or in combination of two or more thereof.

The amount of the filler comprising silica and/or carbon black is in the range of 30 to 120 parts by weight, preferably 50 to 100 parts by weight, based on 100 parts by weight of the diene rubber. A filler proportion outside this range is not desirable because the resulting composition would be markedly deteriorated in its wear resistance or in its processability.

Where carbon black is used in combination with silica, the silica/carbon black weight ratio is preferably in the range of 10/90 to 99/1, more preferably 30/70 to 95/5, most preferably 50/50 to 90/10.

The coupling agent used in the present invention is an essential component for imparting satisfactory processability, mechanical strength and fuel consumption characteristic, as well as excellent viscoelasticity, to the rubber composition of the present invention. The coupling agent X is a compound obtained by an addition reaction of hydrosilyl group (HSi- with Z being H) or mercapto group (HS- with Z being HS-R⁴) in the silane compound (1) to the unsaturated carbon-carbon bonds present in the butadiene polymer.

As examples of divalent alkylene groups of R⁴ in the foregoing general formula are mentioned -CH₂-, -(CH₂)₂-, -(CH₂)₃-, -(CH₂)₄-, -(CH₂)₅-, and -(CH₂)₆-.

As preferred examples of the silane compound represented by the foregoing general formula (1), mention may be made of the following compounds, in which Me stands for methyl group and Et stands for ethyl group):

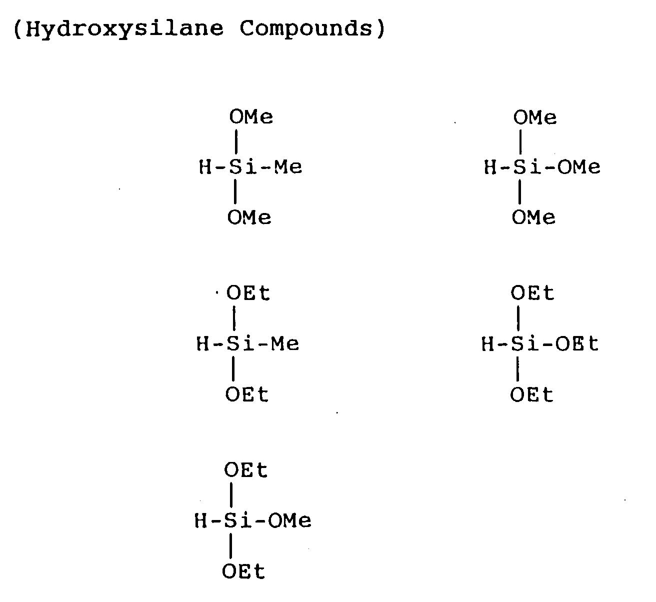

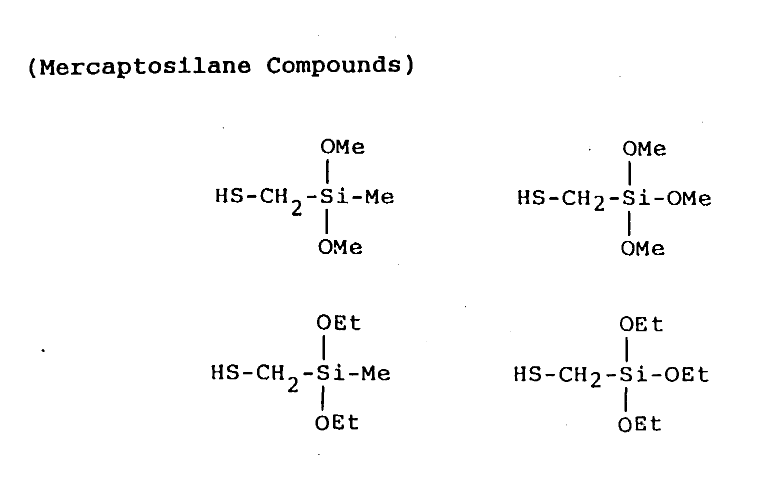

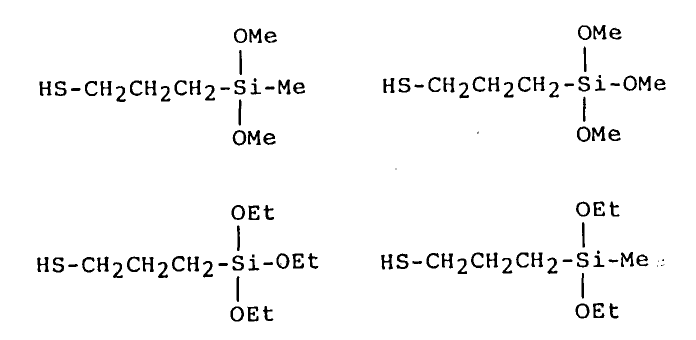

In preparing the coupling agent X, a suitable amount of the silane compound of the general formula (1) to be added to the butadiene polymer is selected in the range of 10 to 300 parts by weight based on 100 parts by weight of the butadiene polymer. If the amount of the silane compound is smaller than 10 parts by weight, the reactivity between the addition reaction product and silica will be decreased, so it is impossible to impart a satisfactory mechanical strength to the rubber composition obtained as a final product. A larger amount of the silane compound than 300 parts by weight is not desirable because the crosslinking reactivity between the addition reaction product and rubber will be deteriorated. Using the silane compound in such a large quantity is not desirable also from the economic viewpoint.

As to the butadiene polymer to which the silane compound of the general formula (1) is added, a butadiene polymer having a number average molecular weight in the range of 500 to 10,000, preferably 500 to 5,000, is selected. Even if an addition reaction product prepared by using a butadiene polymer smaller than 500 in its number average molecular weight is used, it will be impossible to obtain a rubber composition having a sufficient mechanical strength. Likewise, if a butadiene polymer having a number average molecular weight larger than 10,000 is used, there will be a remarkable increase in viscosity of the addition reaction system, which provides an obstacle to the prosecution of the addition reaction.

It is preferable for the butadiene polymer to have a vinyl group content of 50 to 80 mol%, more preferably 55 to 75 mol%, of all the double bonds present in the polymer.

More specifically, as the butadiene polymer to be used in the addition reaction, a polybutadiene is preferred which has a number average molecular weight of 500 to 5,000 and a vinyl group content of 50 to 80 mol% of all the double bonds present in the polymer. The vinyl groups present in the butadiene polymer are highly reactive in comparison with the internal olefin. If the vinyl group content is smaller than 50 mol% of all the double bonds present in the butadiene polymer, a long time will be required for the addition of a predetermined amount of the silane compound, with consequent occurrence of a side reaction such as a crosslinking reaction. For this reason, the addition reaction product obtained by using a butadiene polymer with a smaller vinyl group content is deteriorated in its performance as a silane coupling agent. If the vinyl group content exceeds 80 mol%, the use of the butadiene polymer will result in a marked increase in viscosity of the addition reaction system, thus causing an obstacle to the prosecution of the reaction. In this connection, for preparing a butadiene polymer with a vinyl group content exceeding 80 mol%, an anionic polymerization at a low temperature is necessary, with consequent increase in cost of the butadiene polymer as a starting material of the coupling agent X.

The addition reaction of the polybutadiene polymer and the silane compound (1) for preparing the coupling agent X can be carried out using a suitable known means. The addition reaction with the silane compound being a hydrosilane compound is generally known as a hydrosilylation reaction. Usually, the hydrosilylation reaction is performed in the presence of a metal catalyst. Also in preparing the coupling agent X there may be used a suitable known hydrosilylation catalyst.

Generally, platinum or a rhodium compound is used as a hydrosilylation catalyst. Examples include hydrogen-hexachloroplatinate and a hydrate thereof, platinum-carbonyl complex, platinum-divinyltetramethyldisiloxane complex, platinum-cyclovinylmethylsiloxane complex, RhCl(Ph₃)₃ complex, RhH(CO)(PR₃)₃ complex, and RhCl(CO)(PR₃)₃ complex.

The addition reaction may be conducted in the absence of a solvent, but a solvent which is inert to the addition reaction may be used for the purpose of preventing an increase in viscosity of the reaction system and removing the reaction heat. As examples of employable solvents are mentioned aromatic hydrocarbons such as benzene, toluene, xylene, and xylene mixture, as well as aliphatic hydrocarbons such as hexane, heptane, and ligroin.

The addition reaction using a mercaptosilane compound as the silane compound proceeds by a mere heating, but the use of a radical forming agent is preferred for accelerating the reaction. The use of a radical forming agent permits the desired addition reaction to be completed in mild reaction conditions and in a short time, affording a reaction product in a high addition rate.

The radical forming agent is not specially limited. Commercially available organic peroxides, azo compounds, and hydrogen peroxide are employable.

Examples of organic peroxides include methyl ethyl ketone peroxide, cyclohexanone peroxide, 3,3,5-trimethylcyclohexanone peroxide, methylcyclohexanone peroxide, acetylacetone peroxide, 1,1-bis(tert-butyl peroxy)-3,3,5-trimethylcyclohexane, 1,1-bis(tert-butyl peroxy)-3,3,5-cyclohexane, 2,2-bis(tert-butyl peroxy)butane, tert-butyl hydroperoxide, cumene hydroperoxide, diisopropylbenzene hydroperoxide, p-menthane hydroperoxide, 2,5-dimethylhexane-2,5-dihydroperoxide, 1,1,3,3-tetramethylbutyl hydroperoxide, di-tert-butyl peroxide, tert-butyl cumyl peroxide, dicumyl peroxide, bis(tert-butyl peroxy isopropyl)benzene, 2,5-dimethyl-2,5-di(tert-butyl peroxy)hexane, 2,5-hexanoyl peroxide, lauroyl peroxide, succinic acid peroxide, benzoyl peroxide and substituted compounds thereof, 2,4-dichlorobenzoyl peroxide, m-toluoyl peroxide, diisopropyl peroxy dicarbonate, tert-butyl-2-ethyl hexanoate, di-2-ethyl hexyl peroxy dicarbonate, dimethoxy isopropyl peroxy carbonate, di(3-methyl-3-methoxybutyl)peroxy dicarbonate, tert-butyl peroxy acetate, tert-butyl peroxy pivalate, tert-butyl peroxy neodecanoate, tert-butyl peroxy octanoate, tert-butyl peroxy 3,3,5-trimethylhexanoate, tert-butyl peroxy laurate, tert-butyl peroxy carbonate, tert-butyl peroxy benzoate, and tert-butyl peroxy isobutyrate.

As examples of azo compounds are mentioned 2,2'-azobisisobutyronitrile, 1,1'-azobis(cyclohexane-1-carbonitrile), 2,2'-azobis(2-methylbutyronitrile), 2,2'-azobis(2,4-dimethylvaleronitrile), 2,2'-azobis(2,4-dimethyl-4-methoxyvaleronitrile), 2,2'-azobis(2-(2-imidazoline-2-yl)propane), 2,2'-azobis(2,4,4-trimethylpentane), 2,2'-azobis(2-methylpropane), 2,2'-azobis(2-hydroxymethylpropionitrile), 4,4'-azobis(4-cyanovaleric acid), dimethyl 2,2'-azobis(2-methyl propionate), 2-cyano-2-propyl azoformamide, and 2-phenylazo-4-methoxy-2,4-dimethyl valeronitrile.

The addition reaction may be carried out in the presence of a photoinitiator and under the radiation of ultraviolet light or visible light.

Although the addition reaction may be performed in the absence of a solvent, there may be used a solvent inert to radical with a view to preventing an increase in viscosity of the reaction system and removing the reaction heat. As the solvent there may be used any of aromatic hydrocarbons such as benzene, toluene, xylene and xylene mixture or any of aliphatic hydrocarbons such as hexane, heptane and ligroin.

In the composition of the present invention, the amount of the coupling agent X is selected in the range of 1 to 30 parts by weight, preferably 2 to 15 parts by weight, based on 100 parts by weight of the conjugated diene elastomer. If the amount of the coupling agent X is smaller than 1 part by weight, it will be impossible for the coupling agent to exhibit the function and effect as a silane coupling agent. If it exceeds 30 parts by weight, the resulting rubber composition will be deteriorated in its vulcanizing characteristic.

Basic components of the rubber composition according to the present invention are the diene rubber, silica, preferably together with carbon black, and the coupling agent X. Other additives may be added to the composition such as, for example, zinc oxide, stearic acid, antioxidant, vulcanization accelerator, process oil, and bis(3-triethoxysilylpropyl)tetrasulfide (Si-69). Their proportion is preferably in the range of 1 to 10 parts by weight based on 100 parts by weight of the conjugated diene elastomer.

The present invention will be further described below by way of Examples, but it is to be understood that the invention is not limited thereto.

### [Examples]

### Synthesis Example 1 for preparing a high-molecular silane coupling agent

100 parts by weight of a polybutadiene (Nisseki Polybutadiene B-1000, a product of Nippon Petrochemicals Co.) having a number average molecular weight of 930 and a vinyl group content of 65%, 100 parts by weight of triethoxysilane and 1 part by weight of a 1.0% hydrogen-hexachloroplatinate IPA solution as a catalyst were placed in a reactor equipped with a stirrer, a thermometer and a nitrogen introducing pipe. The interior of the reactor was then purged with nitrogen through the nitrogen introducing pipe. Subsequently, a reaction was allowed to proceed in a nitrogen atmosphere at 85°C for 8 hours.

Thereafter, a volatile component contained in the reaction product was removed under a reduced pressure while maintaining the temperature at 85°C. A transparent liquid of a light yellow was obtained as a silane coupling agent A.

### Synthesis Example 2 for preparing a high-molecular silane coupling agent

A silane coupling agent B was prepared by the same operation as in Synthesis Example 1 except that the polybutadiene used as a starting material in Synthesis Example 1 was substituted by a polybutadiene (Nisseki Polybutadiene B-2000, a product of Nippon Petrochemicals Co.) having a number average molecular weight of 2,000 and a vinyl group content of 65%.

### Synthesis Example 3 for preparing a high-molecular silane coupling agent

A silane coupling agent C was prepared by the same operation as in Synthesis Example 1 except that the polybutadiene used as a starting material in Synthesis Example 1 was substituted by a polybutadiene (Nisseki Polybutadiene B-3000, a product of Nippon Petrochemicals Co.) was substituted by a polybutadiene having a number average molecular weight of 3,000 and a vinyl group content of 65%.

### Synthesis Example 4 for preparing a high-molecular silane coupling agent

100 parts by weight of a polybutadiene (Nisseki Polybutadiene B-1000) having a number average molecular weight of 930 and a vinyl group content of 65%, 100 parts by weight of 3-mercaptopropyl trimethoxysilane (KBM-803, a product of The Shin-etsu Chemical Industray Co.), and 5 parts by weihght of di-tert-butyl peroxide as a radical initiator were placed in a reactor equipped with a stirrer, a thermometer and a nitrogen introducing pipe. The interior of the reactor was then purged with nitrogen through the nitrogen introducing pipe. Subsequently, a reaction was allowed to take place in a nitrogen atmosphere at 120°C for 5 hours.

Thereafter, a volatile component contained in the reaction product was removed under a reduced pressure while maintaining the temperature at 80°C. A transparent liquid of a light yellow was obtained as a silane coupling agent D.

### Synthesis Example 5 for preparing a high-molecular silane coupling agent

A high-molecular silane coupling agent E was prepared by the same operation as in Synthesis Example 4 except that the polybutadiene used as a starting material in Synthesis Example 4 was substituted by a polybutadiene (Nisseki Polybutadiene B-2000, a product of Nippon Petrochemicals Co.) having a number average molecular weight of 2,000 and a vinyl group content of 65%.

### Synthesis Example 6 for preparing a high-molecular silane coupling agent

A high-molecular silane coupling agent was prepared by the same operation as in Synthesis Example 4 except that the polybutadiene used as a starting material in Synthesis Example 4 was substituted by a polybutadiene (Nisseki Polybutadiene B-3000, a product of Nippon Petrochemicals Co.) having a number average molecular weight to 3,000 and a vinyl group content of 65%.

### Examples 1~3 and Comparative Examples 1 and 2

Using the formulation shown in Table 1, in which the numerical values are parts by weight), and in accordance with JIS K 6383, rubber compositions were prepared by kneading.

The following components were used:
SBR (1512) (a product of JSR Co.)
Zinc oxide (a product of Mitsui Mining and Smelting Co.)
Stearic acid (a product of Nippon Oils & Fats Co.)
Antioxidant Nocluck 810-NA (a product of Ohuchi Shinko Kagaku Co.)
Vulcanization accelerator Nocceller DM (a product of Ohuchi Shinko Kagaku Co.)
Sulfur (a product of Kawagoe Kagaku Co.)
Silica Nipsil VN-3 (a product of Nippon Silica Co.)
Si-69 (a product of Degusa Co.)
Roll used: Size φ 6 x 16 inches
Revolution 20 rpm (f)
Speed ratio 1:1:22

**Table 1**

| | | Example | | | Comparative Example | |
|---|---|---|---|---|---|---|
| | | 1 | 2 | 3 | 1 | 2 |
| SBR | | 100 | 100 | 100 | 100 | 100 |
| Zinc Oxide | | 5 | 5 | 5 | 5 | 5 |
| Stearic acid | | 2 | 2 | 2 | 2 | 2 |
| Antioxidant | | 2 | 2 | 2 | 2 | 2 |
| Vulanization accelerator | | 1.5 | 1.5 | 1.5 | 1.5 | 1.5 |
| Sulfur | | 1.5 | 1.5 | 1.5 | 1.5 | 1.5 |
| Silica | | 30 | 30. | 30 | 30 | 30 |
| High-molecular coupling agent | A | 7' | -- | -- | -- | -- |
| " | B | -- | 7 | -- | -- | -- |
| " | C | -- | -- | 7 | -- | -- |
| Si-69* | | -- | -- | -- | -- | 7 |

| | | | | | | |
|---|---|---|---|---|---|---|
| * bis(3-triethoxysilylpropyl)tetrasulfide | | | | | | |

A vulcanization test was conducted by the following method with respect to each of samples obtained in Examples 1 to 3 and Comparative Examples 1 and 2:
Test method: JIS K 6300
Curostometer Model III (170°C)
Amplitude ±1°, Frequency 1.67 Hz (100 cpm)

The results of the vulcanization test are set out in Table 2.

**Table 2**

| | Example | | | Comparative Example | |
|---|---|---|---|---|---|
| | 1 | 2 | 3 | 1 | 2 |
| Minimum torque (kgf/cm²) | 2.4 | 2.6 | 2.8 | 4.1 | 1.3 |
| Maximum torque (kgf/cm²) | 13.8 | 14.0 | 16.0 | 11.8 | 16.5 |
| Torque* (kgf/cm ) | 11.4 | 11.4 | 13.2 | 7.7 | 15.2 |
| T10 (min) | 3.7 | 3.8 | 4.1 | 3.0 | 2.1 |
| T90 (min) | 11.4 | 11.0 | 12.2 | 10.8 | 17.5 |

| | | | | | |
|---|---|---|---|---|---|
| * Maximum torque - Minimum torque | | | | | |

### (Tensile Test)

A vulcanizing operation was conducted at 170°C for 20 minutes for each of samples obtained in Examples 1 to 3 and Comparative Examples 1 and 2. Then, test pieces were prepared and subjected to a tensile test in accordance with the method defined by JIS K 6251. The results of the tensile test are set out in Table 3.

**Table 3**

| | Example | | | Comparative Example | |
|---|---|---|---|---|---|
| | 1 | 2 | 3 | 1 | 2 |
| Tensile strength (kgf/cm²) | 242 | 284 | 295 | 178 | 115 |
| Elongation | 540 | 560 | 560 | 930 | 290 |
| 100% Tensile stress (kgf/cm²) | 14.8 | 15.2 | 16.7 | 10.1 | 23.1 |
| 200% Tensile stress (kgf/cm²) | 24.5 | 26.4 | 29.2 | 13.4 | 59.7 |
| 300% Tensile stress (kgf/cm²) | 40.3 | 42.7 | 48.1 | 17.6 | -- |

As is apparent from the test results shown in Tables 2 and 3, in Comparative Example 1 with a high-molecuar silane coupling agent not added, the rubber composition obtained is insufficient in its strength because no linkage exists between silica and rubber. In Comparative Example 2 in which a low-molecular silane coupling agent was used, T10 value is short and the rubber composition obtained is inferior in processability, although the effect of the coupling agent is recognized. Besides, elongation and strength of the rubber composition are not improved to a satisfactory extent due to the occurrence of an undesirable crosslinking reaction which is attributable to the reactive group (tetrasulfide) contained therein.

In contrast therewith, the rubber compositions according to the present invention exhibit a satisfactory effect of improvement in both their vulcanization characteristics and physical properties.

### Examples 4~6 and Comparative Examples 3 and 4

### (Formulation and Kneading)

Using the formulation shown in Table 4, in which the numerical values are parts by weight, and in accordance with JIS K 6383, kneading was performed to prepare rubber compositions.

The same components and roll as in Example 1 were used.

**Table 4**

| | | Example | | | Comparative Example | |
|---|---|---|---|---|---|---|
| | | 4 | 5 | 6 | 3 | 4 |
| SBR | | 100 | 100 | 100 | 100 | 100 |
| Zinc Oxide | | 5 | 5 | 5 | 5 | 5 |
| Stearic acid | | 2 | 2 | 2 | 2 | 2 |
| Antioxidant | | 2 | 2 | 2 | 2 | 2 |
| Vulanization accelerator | | 1.5 | 1.5 | 1.5 | 1.5 | 1.5 |
| Sulfur | | 1.5 | 1.5 | 1.5 | 1.5 | 1.5 |
| Silica | | 30 | 30 | 30 | 30 | 30 |
| High-molecular coupling agent | D | 7 | -- | -- | -- | -- |
| " | E | -- | 7 | -- | -- | -- |
| " | F | -- | -- | 7 | -- | -- |
| Si-69* | | -- | -- | -- | -- | 7 |

| | | | | | | |
|---|---|---|---|---|---|---|
| * bis(3-triethoxysilylpropyl)tetrasulfide | | | | | | |

### (Vulcanization Test)

A vulcanizing test was conducted by the same method as in Example 1 with respect to each of samples obtained in Examples 4 to 6 and 3 and 4. The results of the test are shown in Table 5 below.

**Table 5**

| | Example | | | Comparative Example | |
|---|---|---|---|---|---|
| | 4 | 5 | 6 | 3 | 4 |
| Minimum torque (kgf/cm²) | 2.6 | 2.8 | 2.7 | 4.1 | 1.3 |
| Maximum torque (kgf/cm²) | 12.8 | 13.0 | 13.0 | 11.8 | 16.5 |
| Torque* (kgf/cm ) | 10.2 | 10.2 | 10.3 | 7.7 | 15.2 |
| T10 (min) | 3.8 | 3.8 | 4.0 | 3.0 | 2.1 |
| T90 (min) | 11.4 | 11.0 | 12.2 | 10.8 | 17.5 |

| | | | | | |
|---|---|---|---|---|---|
| * Maximum torque - Minimum torque | | | | | |

### (Tensile Test)

A vulcanizing operation was conducted at 170°C for 20 minutes with respect to each of samples obtained in Examples 4 to 7 and Comparative Examples 3 and 4. Then, test pieces were prepared and subjected to a t ensile test in accordance with the method defined by JIS K 6251. The results of the test are shown in Table 6 below.

**Table 6**

| | Example | | | Comparative Example | |
|---|---|---|---|---|---|
| | 4 | 5 | 6 | 3 | 4 |
| Tensile strength (kgf/cm²) | 229 | 266. | 255 | 178 | 115 |
| Elongation | 740 | 750 | 710 | 930 | 290 |
| 100% Tensile stress (kgf/cm²) | 13.5 | 13.5 | 13.4 | 10.1 | 23.1 |
| 200% Tensile stress (kgf/cm²) | 21.5 | 22.9 | 24.1 | 13.4 | 59.7 |
| 300% Tensile stress (kgf/cm²) | 36.8 | 39.6 | 43.2 | 17.6 | -- |

As is apparent from the test results shown in Tables 4 and 5, in Comparative Example 3 with a high-molecular silane coupling agent not added, the rubber composition obtained is insufficient in its strength because no linkage exists between silica and rubber. In Comparative Example 4 using a low-molecular silane coupling agent, the effect of the coupling agent is recognized, but T10 value is short and a problem remains to be solved in point of its processability. Moreover, both elongation and strength of the rubber composition are not improved toa satisfactory extent due to the occurrence of an undesirable crosslinking reaction which is attributable to the reactive group (tetrasulfide) contained therein.

In contrast therewith, the rubber compositions prepared according to the present invention exhibit a satisfactory effect of improvement in their vulcanization characteristics and physical properties.

### Examples 7~9 and Comparative Examples 5 and 6

### (Formulation and Kneading)

Using the formulation shown in Table 7, in which the numerical values are parts by weight, and in accordance with JIS K 6383, kneading was performed to prepare rubber compositions.

The following components were used:
SBR 1500 and SL-574 (products of JSR Co.)
NR (RSS#1) (a product of Natural Rubber Co.)
SBR (NS116) (a product of Nippon Zeon Co.)
N234 (a product of Tokai Carbon Co.)
Nipsil VN-3 (a product of Nippon Silica Co.)
Aromax 3 (a product of Fuji Kosan Co.)
Diethylene glycol (Katayama Kagaku Co.)
Zinc oxide (a product of Seido Kagaku Co.)
Stearic acid (Nippon Oils & Fats Co.)
Nocceller D and CZ (products of Ohuchi Shinko Kagaku Co.)
Nocluck 6C (a product of Ohuchi Shinko Kagaku Co.)
Sulfur (a product of Hosoi Kagaku Co.)
Si-69 (a product of Degsa Co.)

**Table 7**

| | | Formularion 1 (part by weight) | | | | |
|---|---|---|---|---|---|---|
| | | Example | | | Comparative Example | |
| | | 7 | 8 | 9 | 5 | 6 |
| SBR 1500 | | 50 | 50 | 50 | 50 | 50 |
| SL-574 | | 50 | 50 | 50 | 50 | 50 |
| N234 | | 40 | 40 | 40 | 40 | 40 |
| Nipsil VN-3 | | 40 | 40 | 40 | 40 | 40 |
| Aromax 3 | | 36 | 36 | 36 | 36 | 36 |
| Zinc oxide | | 3 | 3 | 3 | 3 | 3 |
| Stearic acid | | 2 | 2 | 2 | 2 | 2 |
| Nocceller D | | 2 | 2 | 2 | 2 | 2 |
| Nocceller CZ | | 1.5 | 1.5 | 1.5 | 1.5 | 1.5 |
| Sulfur | | 1.5 | 1.5 | 1.5 | 1.5 | 1.5 |
| High-molecular agent coupling | A | 4 | | | | |
| " | B | | 4 | | | |
| " | C | | | 4 | | |
| Si-69* | | | | | | 4 |

| | | | | | | |
|---|---|---|---|---|---|---|
| * bis(3-triethoxysilylpropyl)tetrasulfide | | | | | | |

Various tests were conducted by the following methods with respect to each of samples obtained in Examples 7 to 9 and Comparative Examples 5 and 6.

### (Mooney Viscosity Measurement, Mooney Scorch Test, and Vulcanization Test)

Test method: JIS K 6300
Curastometer
Amplitude ±1°, Frequency 1.6 Hz (100 cpm)

### (Hardness Test)

Test method: JIS K 6253

### (Tensile Test)

Test method: JIS K 6251
Shape of specimen: Dumbbell-shaped No. 3

### (Abrasion Test)

Test method: JIS K 6264 B method
Load: 4.50 kgf
Angle: 10°
Preliminary test: 500 times
Main test: 500 times

### (Viscoelasticity Test)

Test method: JIS K 7198 A method
Shape of specimen: 1 mm x 5 mm x 30 mm
Measurement mode: Tension mode
Measurement frequency: 10 Hz
Heat-up rate: 2°C/min
Measurement temperature: -10~70°C
Dynamic strain: 0.1%
Tester: RSA-II (a measuring apparatus manufactured by Rheometric Co.)

### (Test Result)

The results of the above tests for rubber compositions prepared in accordance with the above formulation are shown in Table 8 below.

**Table 8**

| Formulation 1 (part by weight) | | | | | |
|---|---|---|---|---|---|
| | Example | | | Comparative Example | |
| | 7 | 8 | 9 | 5 | 6 |
| Mooney viscosity test L1+4 (100°C) | 53 | 56 | 60 | 85 | 54 |
| Mooney scorch test ML (1+) 125°C | | | | | |
| Lowest viscosity(Vm) | 38 | 34 | 35 | 39 | 36 |
| t5 (min) | 22.8 | 23.3 | 23.9 | 30.5 | 19.4 |
| t35 (min) | 28.3 | 28.9 | 29.9 | 36.5 | 25.8 |
| Hardness test | | | | | |
| Durometer hardness | A66 | A65 | A68 | A64 | A71 |
| Tensile test | | | | | |
| Tensile strength (MPa) | 22.7 | 22.4 | 23.4 | 21.4 | 23.3 |
| Elongation (%) | 630 | 640 | 640 | 720 | 520 |
| 100% Tensile stress (MPa) | 2.00 | 2.23 | 2.43 | 1.70 | 2.96 |
| 200% Tensile stress (MPa) | 4.90 | 4.99 | 5.96 | 3.87 | 7.50 |
| 300% Tensile stress (MPa) | 9.95 | 10.9 | 11.3 | 7.27 | 12.7 |
| Abrasion test (Acron type) | | | | | |
| Abrasion volume | 0.011 | 0.010 | 0.012 | 0.018 | 0.022 |
| per 1000 revolutions (cm³) | | | | | |
| Viscoelasticity test | | | | | |
| 0°C tan δ | 0.162 | 0.160 | 0.161 | 0.161 | 0.152 |
| 60°C tan δ | 0.124 | 0.128 | 0.126 | 0.131 | 0.124 |

Reference to the results set out in Table 8 shows that, in Comparative Example 5 not using a silane coupling agent, Mooney viscosity is extremely high and processability is poor. Besides, due to the absence of any linkage between silica and rubber, the rubber composition obtained is low in tensile stress and poor in abrasion resistance. On the other hand, in Comparative Example 6 using a low-molecular silane coupling agent, the use of the coupling agent proves to be effective in the tensile test, but the value obtained in the Mooney scorch test is short and processability is not improved to a satisfactory extent. A problem exists also in point of abrasion resistance.

In contrast therewith, the rubber compositions for an automobile tire tread prepared according to the present invention not only exhibits a satisfactory effect of improvement in both their vulcanization characteristics and physical properties but also in a dynamic viscoelastic measurement as a barometer of a rolling friction of tire (fuel consumption characteristic) they exhibit equal values to those obtained in systems using low-molecular silane coupling agents which have already proved effective.

### Examples 10-12 and Comparative Examples 7 and 8

### (Formulation and Kneading)

Using the same formulation as shown in Table 9 and the same method as in Example 7, kneading was performed to prepared rubber compositions.

**Table 9**

| Formularion 1 (part by weight) | | | | | | |
|---|---|---|---|---|---|---|
| | | Example | | | Comparative Example | |
| | | 10 | 11 | 12 | 7 | 8 |
| SBR 1500 | | 50 | 50 | 50 | 50 | 50 |
| SL-574 | | 50 | 50 | 50 | 50 | 50 |
| N234 | | 40 | 40 | 40 | 40 | 40 |
| Nipsil VN-3 | | 40 | 40 | 40 | 40 | 40 |
| Aromax 3 | | 36 | 36 | 36 | 36 | 36 |
| Zinc oxide | | 3 | 3 | 3 | 3 | 3 |
| Stearic acid | | 2 | 2 | 2 | 2 | 2 |
| Nocceller D | | 2 | 2 | 2 | 2 | 2 |
| Nocceller CZ | | 1.5 | 1.5 | 1.5 | 1.5 | 1.5 |
| Sulfur | | 1.5 | 1.5 | 1.5 | 1.5 | 1.5 |
| High-molecular agent coupling | D | 4 | | | | |
| " | E | | 4 | | | |
| " | F | | | 4 | | |
| Si-69* | | | | | | 4 |

| | | | | | | |
|---|---|---|---|---|---|---|
| * bis(3-triethoxysilylpropyl)tetrasulfide | | | | | | |

Various tests were conducted by the same methods as in Example 7 with respect to each of samples obtained in Examples 10-12 and Comparative Examples 7 and 8.

**Table 10**

| Formulation 1 (part by weight) | | | | | |
|---|---|---|---|---|---|
| | Example | | | Comparative Example | |
| | 10 | 11 | 12 | 7 | 8 |
| Mooney viscosity test L1+4 (100°C) | 54 | 58 | 62 | 85 | 54 |
| Mooney scorch test ML (1+) 125°C | | | | | |
| Lowest viscosity(Vm) | 39 | 35 | 37 | 39 | 36 |
| t5 (min) | 22.6 | 23.0 | 23.8 | 30.5 | 19.4 |
| t35 (min) . | 28.0 | 28.8 | 29.9 | 36.5 | 25.8 |
| Hardness test Durometer hardness | A67 | A66 | A67 | A64 | A71 |
| Tensile test | | | | | |
| Tensile strength (MPa) | 21.7 | 22.4 | 21.4 | 21.4 | 23.3 |
| Elongation (%) | 640 | 650 | 650 | 720 | 520 |
| 100% Tensile stress (MPa) | 1.93 | 2.03 | 2.20 | 1.70 | 2.96 |
| 200% Tensile stress (MPa) | 4.85 | 4.98- | 5.26 | 3.87 | 7.50 |
| 300% Tensile stress 8.95 (MPa) | | 9.09 | 9.23 | 7.27 | 12.7 |
| Abrasion test (Acron type) | | | | | |
| Abrasion volume per 1000 revolutions (cm³) | 0.011 | 0.010 | 0.015 | 0.018 | 0.022 |
| Viscoelasticity test | | | | | |
| 0°C tan δ | 0.166 | 0.163 | 0.169 | 0.161 | 0.152 |
| 60°C tan δ | 0.144 | 0.138 | 0.136 | 0.131 | 0.124 |

Reference to the results set out in Table 10 shows that, in Comparative Example 7 not using a silane coupling agent, Mooney viscosity is extremely high and processability is poor. Besides, due to the absence of any linkage between silica and rubber, the rubber composition obtained is low in tensile stress and poor in abrasion resistance. On the other hand, in Comparative Example 8 using a low-molecular silane coupling agent, the values obtained in Mooney scorch test are short and processability is not improved to a satisfactory extent although the use of the coupling agent proves to be effective in the tensile test. A problem exists also in abrasion resistance.

On the other hand, the rubber compositions for an automobile tire tread prepared according to the present invention not only exhibit a satisfactory improvement in both their vulcanization characteristics and physical properties but also in a dynamic viscoelasticity measurement as a barometer of a rolling friction of tire they exhibit equal values to those obtained in systems using low-molecular silane coupling agents which have already proved to be effective.

## Claims

1. A rubber composition comprising a diene rubber, from 10 to 120 parts by weight of silica, as filler, and from 1 to 30 parts by weight of a high-molecular silane, as coupling agent, both based on 100 parts by weight of said diene rubber, said high-molecular silane coupling agent being preparable by adding from 10 to 300 parts by weight of a silane compound to 100 parts by weight of a butadiene polymer having a number average molecular weight from 500 to 10,000, said silane compound being represented by the following general formula (1): 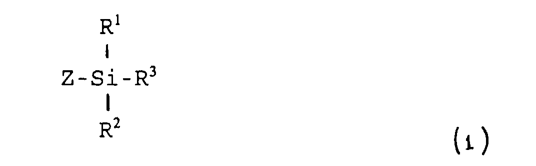 wherein:
Z- represents H- or HS-R⁴,
R¹, R² and R³, which may be the same or different, are each methoxy, ethoxy, phenoxy, methyl, ethyl, or phenyl,
with the proviso that at least one of R¹, R² and R³ is methoxy, ethoxy, or phenoxy, and R⁴ is an alkylene group having from 1 to 6 carbon atoms.

2. A rubber composition wherein the diene rubber and the silane-coupling agent are as defined in claim 1 and the filler comprises from 30 to 120 parts by weight of silica and a carbon black.

3. A rubber composition according to claim 1 or 2, wherein said butadiene polymer from which said high-molecular silane coupling agent is preparable has a number average molecular weight from 500 to 5,000 and a vinyl group content from 50 to 80 mol% of all double bonds present in the butadiene polymer.

4. A rubber composition according to any preceding claim, wherein said butadiene polymer which forms said high-molecular silane coupling agent is a polybutadiene.

5. A rubber composition according to any preceding claim, wherein said silane compound is represented by the formula: 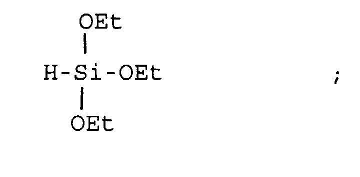 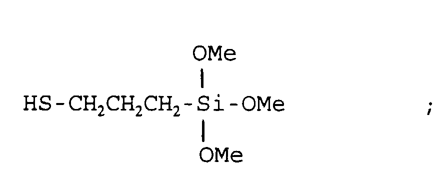 or 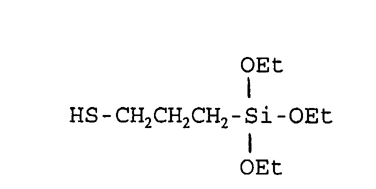 wherein Me represents a methyl group and Et represents an ethyl group.

6. A rubber composition according to any of claims 2 to 5, wherein said silica and said carbon black are used at a weight ratio from 10/90 to 99/1 in terms of silica/carbon black.

7. A rubber composition according to claim 6, wherein the silica/carbon black weight ratio is from 50/50 to 90/10.

8. A rubber composition according to any preceding claim, wherein said diene rubber is selected from the group consisting of cis 1,4-polyisoprene rubber, 3,4-polyisoprene rubber, styrene/butadiene copolymer rubber, isoprene/butadiene copolymer rubber, styrene/isoprene copolymer rubber, styrene/isoprene/butadiene terpolymer rubber, cis 1,4-polybutadiene rubber, trans 1,4-polybutadiene rubber (70-95% trans), low vinyl polybutadiene rubber (10-30% vinyl), medium-vinyl polybutadiene rubber (30-50% vinyl), high vinyl polybutadiene rubber (50-90% vinyl), emulsion-polymerized styrene/butadiene/acrylonitrile terpolymer rubber, and butadiene/acrylonitrile copolymer rubber.

9. Use of a rubber composition according to any preceding claim in vehicle tires.

10. Use of a rubber composition according to any of claims 2 to 8 in vehicle tire treads.
